(19) Europäisches Patentamt
European Patent Office
Office européen des brevets

(11) **EP 3 068 677 B1**

(12) **FASCICULE DE BREVET EUROPEEN**

(45) Date de publication et mention de la délivrance du brevet:
**09.01.2019 Bulletin 2019/02**

(21) Numéro de dépôt: **14798889.3**

(22) Date de dépôt: **14.11.2014**

(51) Int Cl.:
***B62D 25/00*** ***(2006.01)***

(86) Numéro de dépôt international:
**PCT/EP2014/074689**

(87) Numéro de publication internationale:
**WO 2015/071444 (21.05.2015 Gazette 2015/20)**

(54) **POUTRE POUR LA RÉALISATION D'UNE OSSATURE MÉTALLIQUE**

TRÄGER ZUR HERSTELLUNG EINES METALLGERÜSTS

BEAM FOR PRODUCING A METAL FRAMEWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2013 FR 1361220**
**07.04.2014 EP 14382133**

(43) Date de publication de la demande:
**21.09.2016 Bulletin 2016/38**

(73) Titulaire: **Autotech Engineering, A.I.E.**
**48340 Amorebieta-Etxano (ES)**

(72) Inventeurs:
- **VALENCIA CARRIO, Xavier**
  **E-08241 Manresa (ES)**
- **MARQUEZ DURAN, Sergi**
  **E-08256 Rajadell (ES)**
- **ESPANA DE JUAN, Lluis**
  **E-08185 Llica de Vall (Barcelona) (ES)**
- **CAZES, Christophe**
  **F-78000 Versailles (FR)**
- **GATARD, Grégory**
  **F-91310 Leuville sur Orge (FR)**
- **BARELLI, Vincent**
  **F-91620 La Ville du Bois (FR)**
- **LEROY, Emmanuel**
  **F-91370 Verrieres le Buisson (FR)**
- **DUNAND, Matthieu**
  **F-75011 Paris (FR)**
- **NIESS, Matthieu**
  **89200 Avallon (FR)**

(74) Mandataire: **ZBM Patents - Zea, Barlocci & Markvardsen**
**Plaza Catalunya, 1 2nd floor**
**08002 Barcelona (ES)**

(56) Documents cités:
| | |
|---|---|
| EP-A2- 1 498 345 | WO-A1-2011/071434 |
| DE-A1- 10 007 358 | GB-A- 2 497 396 |
| JP-A- H08 188 174 | US-A1- 2001 024 054 |
| US-A1- 2005 285 416 | US-A1- 2011 163 571 |
| US-A1- 2012 119 477 | |

## Description

### DOMAINE DE L'INVENTION

La présente invention concerne le domaine des pièces métalliques intervenant dans la réalisation d'une ossature métallique, notamment d'un châssis ou d'une carrosserie de véhicules.

### ETAT DE LA TECHNIQUE

On a déjà réalisé de nombreuses poutres métalliques pour carrosserie de véhicules.

On a en particulier proposé de réaliser de telles poutres par assemblage de deux pièces métalliques, par exemple une première pièce possédant un corps principal de section droite générale en U pourvue de flasques latéraux en saillie vers l'extérieur à partir des bords du U et une deuxième pièce formée d'une plaque de recouvrement. L'intérêt de réaliser la poutre finale par assemblage de deux pièces provient notamment de la liberté ainsi offerte de disposer et de combiner à la conception des flans d'épaisseurs différentes et/ou formés de matériaux différents et ainsi d'obtenir une définition précise des caractéristiques mécaniques du produit final, tout en réduisant généralement le poids total de la poutre, par rapport à des techniques classiques antérieures.

Généralement les deux pièces précitées sont fixées entre elles par soudure, le plus souvent par des points de soudure répartis sur la longueur des pièces au niveau de feuillures en chevauchement, qui peuvent coïncider avec les flasques latéraux précités.

Le document WO 2011/071434 décrit une poutre telle qu'illustrée sur la figure 1 annexée.

Cette poutre comprend une première pièce 10 en forme de chapeau comportant un corps 12 de section droite générale en U pourvue de flasques latéraux 14, 15 en saillie vers l'extérieur à partir des bords du U et une deuxième pièce 20 formée d'une plaque de recouvrement.

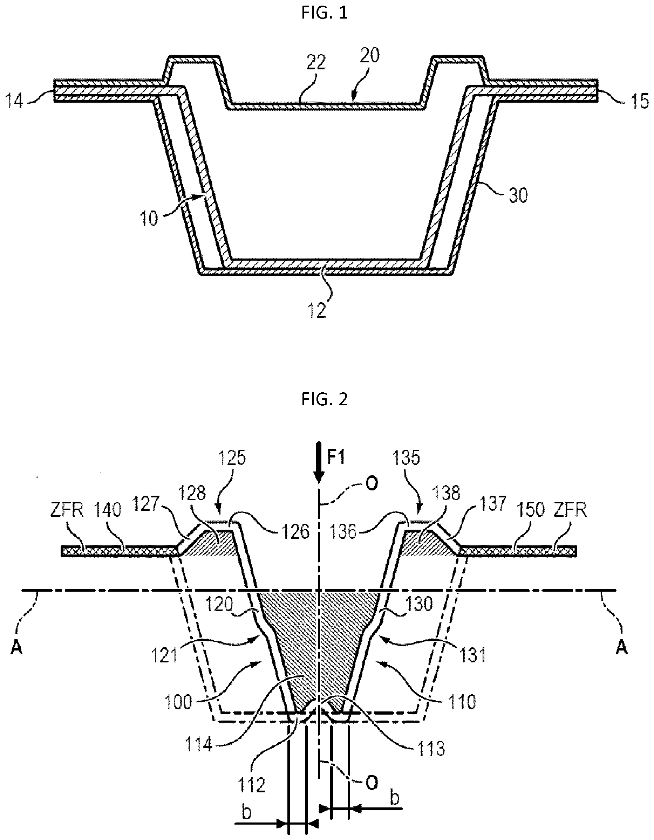

Le document précise que l'âme 22 de la plaque 20 peut être plane ou conformée comme illustré sur la figure 1.

La poutre peut de plus comporter optionnellement une pièce d'habillage 30.

Les documents US 2012/119477, US 2003/000156, US 2001/024054, DE 10 2009 047956, US 2013/300155, JP H04 56688, US2011/163571, GB 2 497 396 et US2013/140851 décrivent d'autres variantes de pièces.

### OBJET DE L'INVENTION

L'invention a pour objectif de proposer une nouvelle géométrie de pièces pour assurer une bonne résistance et rigidité tout en réduisant la masse de matière utilisée et en optimisant la capacité d'absorption d'énergie en cas de déformation sous un choc.

L'objet précité est atteint selon l'invention grâce à une poutre comportant au moins une première pièce possédant un corps principal de section droite générale en U pourvue de flasques latéraux en saillie vers l'extérieur à partir des bords du U, le corps principal comprenant également un fond de pièce ainsi que deux ailes qui forment les bords du U, caractérisée en ce que :

- la partie centrale du corps principal définit des cellules travaillant respectivement en tension et en compression, de part et d'autre d'un axe neutre de flexion principale, formées par deux zones de transition qui sont chacune situées entre l'élément en U et un flasque latéral ;
- le fond de pièce du corps principal comprend au moins une transition formée par une discontinuité de courbure ;
- au moins une aile comprend au moins une transition formée par une discontinuité de courbure ;
- au moins un flasque latéral comprend au moins une zone de plus faible résistance mécanique que le reste du corps principal, ladite au moins une zone de plus faible résistance mécanique étant réalisée du même côté du U que l'aile comprenant ladite au moins une transition.

Comme on le verra par la suite, grâce à une redistribution de la matière constitutive du corps principal, autour de l'axe principal de flexion du corps, et à une synergie technique entre la au moins une zone de faible résistance mécanique prévue sur au moins un flasque latéral et la au moins une transitions précitée prévue notamment sur au moins une aile du corps principal, l'invention permet de réduire notablement la masse de la poutre tout en améliorant les propriétés mécaniques par rapport à l'art antérieur, notamment en permettant d'augmenter très sensiblement l'énergie absorbée en cas de déformation sous choc.

Selon d'autres caractéristiques avantageuses mais non limitatives de l'invention :

- chacune des ailes comprend au moins une transition, et en ce que chacun des flasques latéraux comprend au moins une zone de plus faible résistance mécanique ;
- les cellules travaillant en tension et les cellules travaillant en compression possèdent chacune une concavité tournée vers l'axe neutre de flexion principale ;
- la poutre présente un axe de symétrie ;
- la poutre présente une dissymétrie ;
- la poutre comprend également des zones de plus faible résistance mécanique que le reste du corps principal au niveau des ailes et/ou du fond de pièce du corps principal en U, pour contrôler les déformations ;
- la poutre comprend en outre une plaque de recouvrement ;

- fond de pièce comprend au moins deux segments plans dont chaque segment plan présente une largeur inférieure ou égale à $1,9t.\sqrt{E/sy}$ dans laquelle t représente l'épaisseur de la pièce, E représente le module Young du matériau de la pièce et sy représente le paramètre de résistance mécanique appelé limite élastique, typiquement égal à 1100MPa ;

- les zones de transition sont formées d'incurvation ;

- au moins une aile comprend au moins une transition située entre 50 - 90% de la hauteur du corps principal ;

- au moins une aile comprend au moins une transition en forme de double coudage arrondi qui comprend un point d'inflexion, ou bien une transition qui forme un segment rectiligne qui relie chacune des extrémités de ladite au moins une aile en formant un angle.

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 précédemment décrite représente une vue schématique en coupe transversale d'une pièce conforme à l'état de la technique,

- la figure 2 représente une vue en coupe transversale similaire d'une pièce conforme à la présente invention,

- la figure 3 représente une vue en coupe transversale similaire d'une pièce conforme à la présente invention selon un mode de réalisation différent de celui exposé à la figure 2 ;

- la figure 4 représente une illustration schématique d'une pièce, sans axe de symétrie, conforme à la présente invention ;

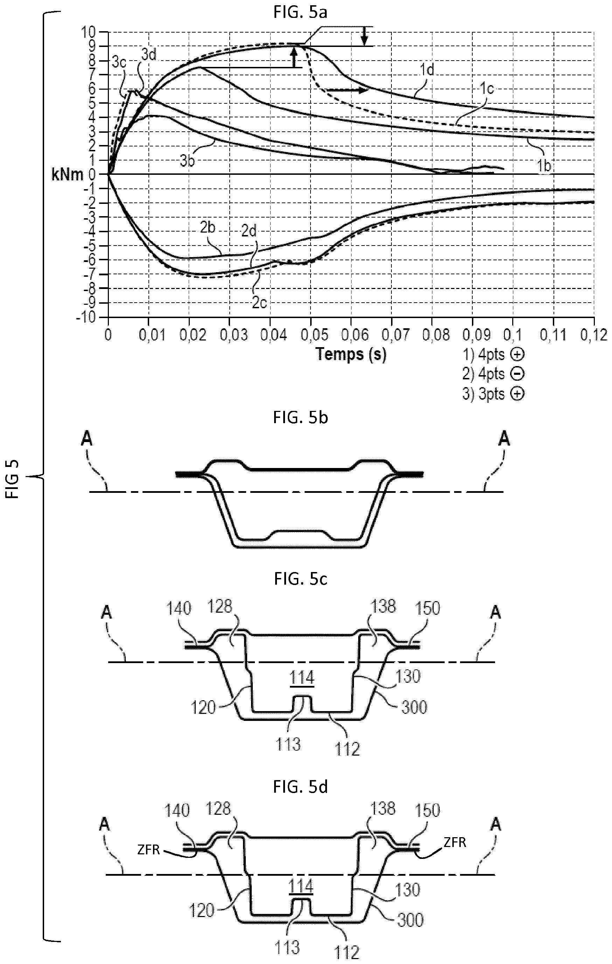

- la figure 5a représente les valeurs de moment au cours du temps pour différents types de flexion respectivement d'une pièce de référence illustrée en coupe transversale sur la figure 5b, d'une pièce intermédiaire entre l'invention et la pièce de référence qui est représentée sur la figure 5c et d'un mode de réalisation conforme à l'invention représenté sur la figure 5d ; plus précisément encore la figure 5a représente sur les courbes 1b, 1c et 1d respectivement le moment de flexion sous une flexion quatre points simulant un cas de choc latéral d'une pièce formant pied milieu de carrosserie de véhicules automobiles ; les courbes 2b et 2c représentent des courbes similaires sous une flexion quatre points simulant un cas de retournement de véhicule respectivement pour une pièce de référence illustrée sur la figure 5b et la pièce intermédiaire représentée sur la figure 5c et les courbes 3b et 3c représentent le moment sous un test de flexion trois points pour des pièces correspondant respectivement à la pièce de référence illustrée sur la figure 5b et de la pièce intermédiaire représentée sur la figure 5c ;

- la figure 6 représente un tableau récapitulant successivement le moment maximal en kNm sous une flexion quatre points, la masse en kg et le gain en masse de deux modes de réalisation conformes à l'invention illustrés sur la colonne de centre et la colonne de droite, par rapport à une pièce de référence illustrée sur la colonne de gauche ;

- la figure 7 représente un tableau qui compare le mode de réalisation exposé à la figure 2 avec différents types de pièces ;

- la figure 8 représente un ensemble de courbes qui le résultat de simulation de flexion quatre points pour les différentes pièces exposées à la figure 7 ;

- la figure 9.a représente une vue en coupe transversale d'une pièce semblable au mode de réalisation présenté à la figure 2 ;

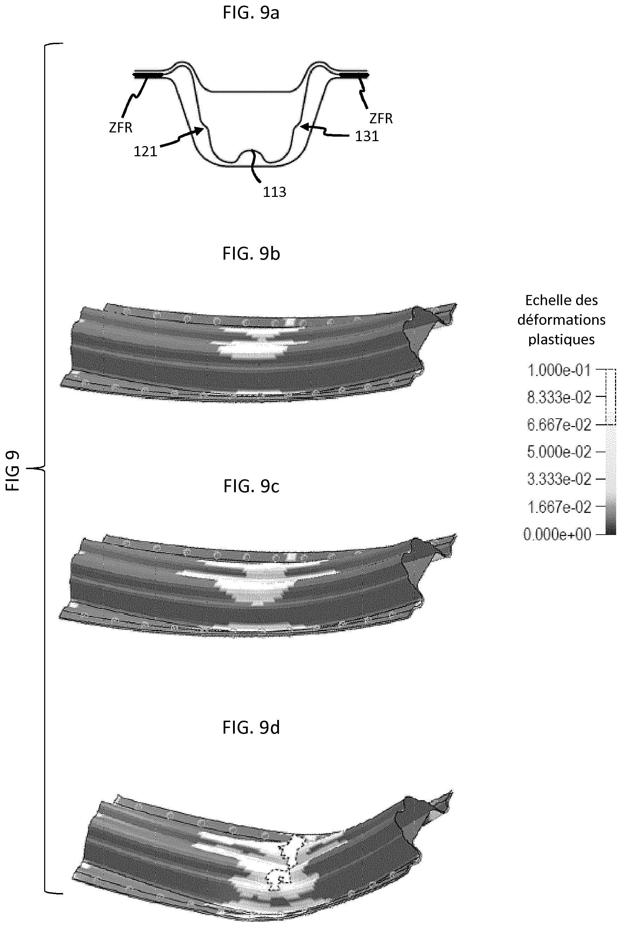

- les figures 9.b, 9.c et 9.d représentent la répartition des contraintes mécaniques ainsi que la déformation d'une pièce semblable au mode de réalisation exposé à la figure 2 qui est soumise à une flexion quatre points ;

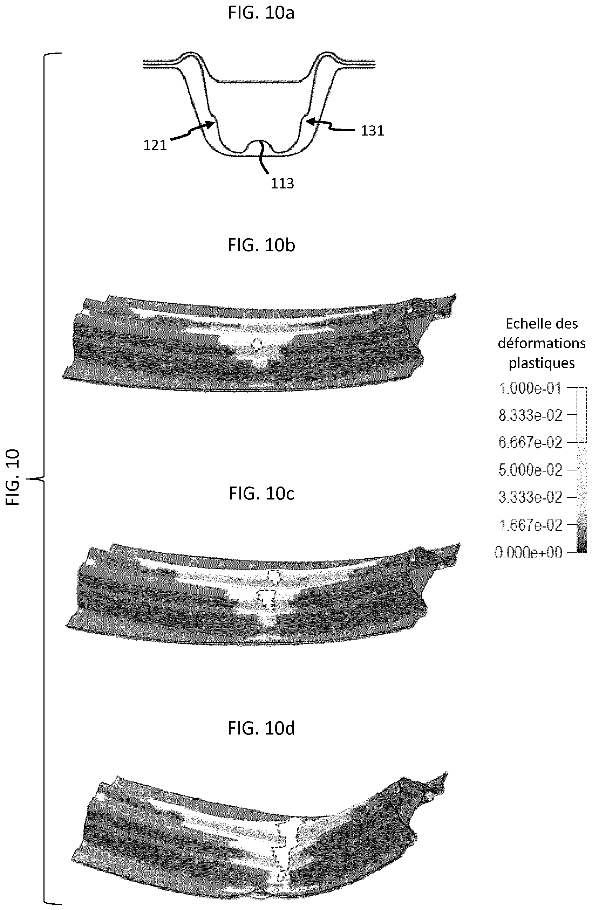

- la figure 10.a représente une vue en coupe d'une pièce similaire au mode de réalisation exposé à la figure 2 mais ladite pièce ne comprenant pas de zones de plus faible résistance mécanique sur les flasques latéraux ;

- les figures 10.b, 10.c et 10.d représentent la répartition des déformations plastiques d'une pièce qui est soumise à une flexion quatre points, ladite pièce étant semblable au mode de réalisation exposé à la figure 2 mais ne comprend pas de zones de plus faible résistance mécanique sur les flasques latéraux ;

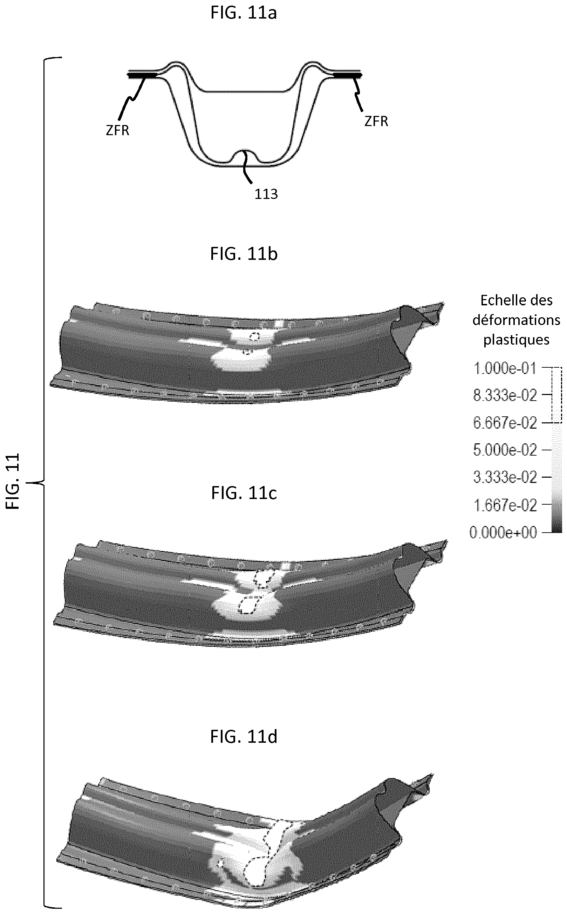

- la figure 11.a représente une vue en coupe transversale d'une pièce semblable au mode de réalisation exposé à la figure 2 mais ladite pièce ne comprenant pas de transition sur les ailes ;

- les figures 11.b, 11.c et 11.d représentent la répartition des déformations plastiques d'une pièce qui est soumise à une flexion quatre points, ladite pièce étant semblable au mode de réalisation exposé à la figure 2 mais ne comprend pas de transition sur les ailes ;

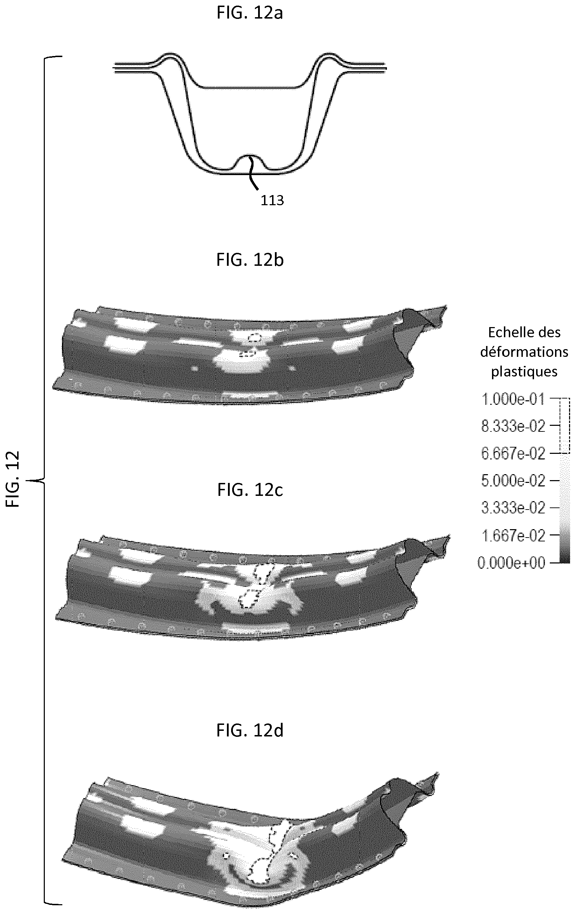

- la figure 12.a représente une vue en coupe transversale d'une pièce semblable au mode de réalisation exposé à la figure 2 mais ladite pièce ne comprenant pas de transition sur les ailes, ni de zones de plus faible résistance mécanique sur les flasques latéraux ;

- les figures 12.b, 12.c et 12.d représentent la répartition des déformations plastiques d'une pièce qui est soumise à une flexion quatre points, ladite pièce étant semblable au mode de réalisation exposé à la figure 2 mais ne comprend pas de transition sur les ailes, ni de zones de plus faible résistance mécanique que sur les flasques latéraux ;

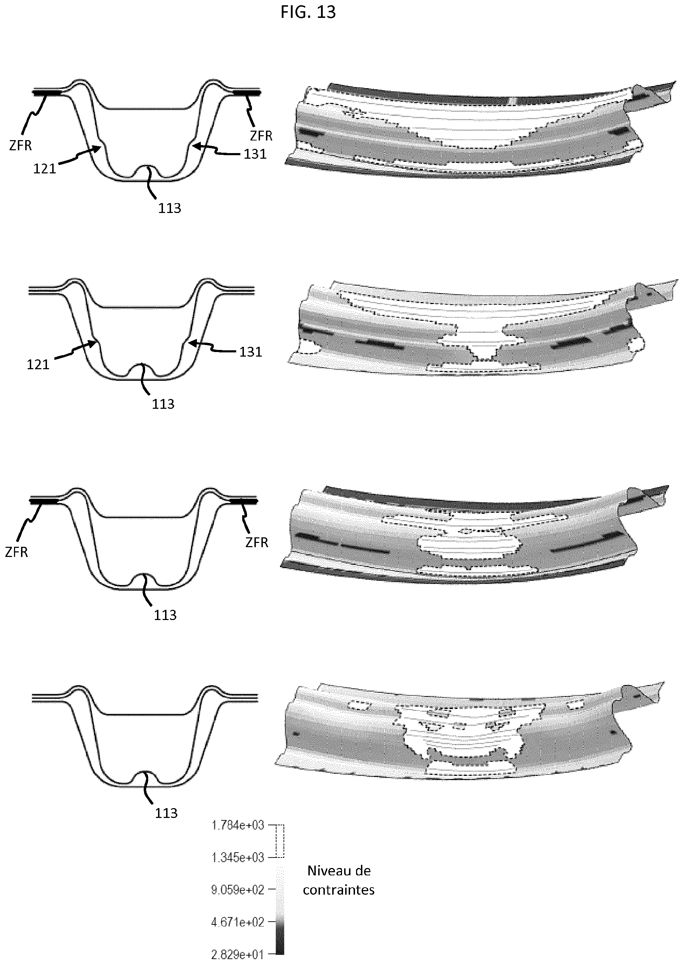

- la figure 13 représente une vue en coupe transversale de chacune des pièces qui sont illustrées aux figures 9, 10, 11 et 12, ainsi qu'une vue de la répartition des contraintes mécaniques de chacune des pièces qui est plus détaillée que les vues présentées aux figures 9, 10, 11 et 12 ;

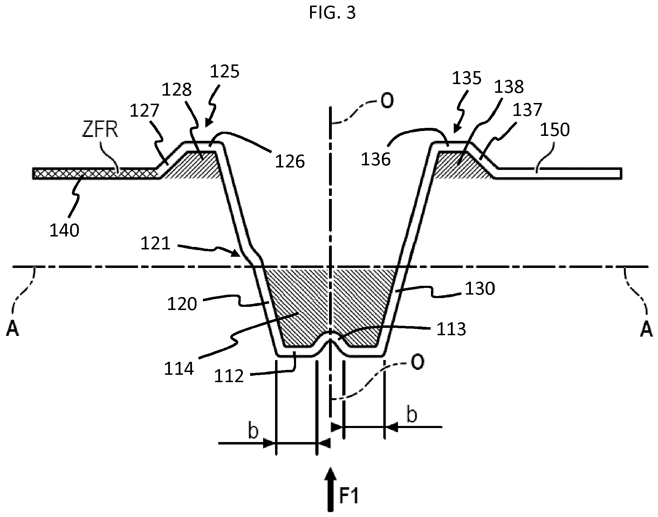

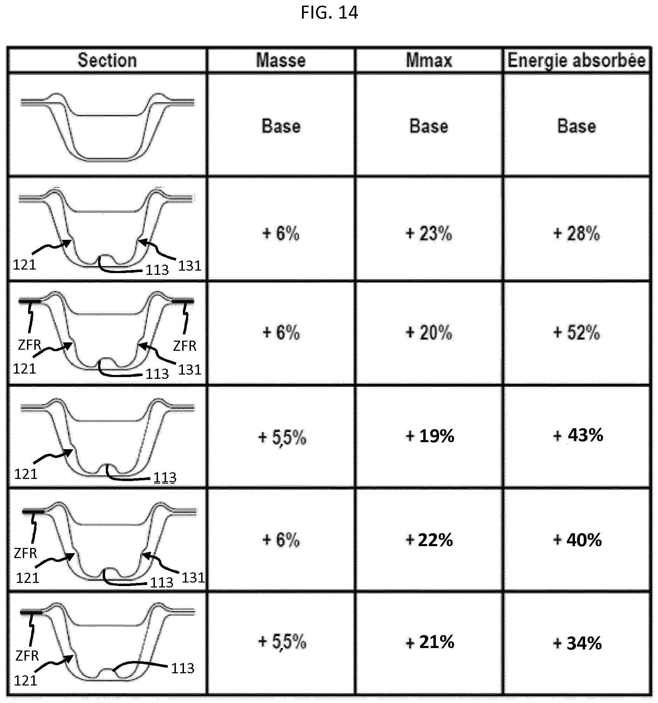

- la figure 14 représente un tableau qui compare le mode de réalisation exposé à la figure 3 avec différents type de poutres.

On a représenté sur les figures 2 et 3, en traits pleins, la section droite d'une poutre conforme à la présente invention et, en traits interrompus, la section droite d'une poutre conforme à l'état de la technique.

Selon le mode de réalisation particulier représenté sur la figure 2, la section de la poutre présente un axe de symétrie O-O.

Comme on le voit sur la figure 2, l'axe de symétrie O-O constitue un axe neutre élastique et la section de la poutre selon l'invention illustrée sur la figure 2 comprend en outre un axe neutre élastique de flexion principale A-A. Ces axes neutre élastique O-O et neutre élastique de flexion principale A-A s'étendent dans la section de la poutre perpendiculairement à l'axe longitudinal de la poutre.

On entend par « axe neutre élastique de flexion principale A-A » l'axe d'équilibre des moments résultant d'une déformation à la flexion due à un effort tranchant résultant suivant l'axe O-O et/ou un moment fléchissant autour de l'axe A-A.

L'axe neutre élastique de flexion principale A-A est orthogonal à l'axe neutre élastique O-O.

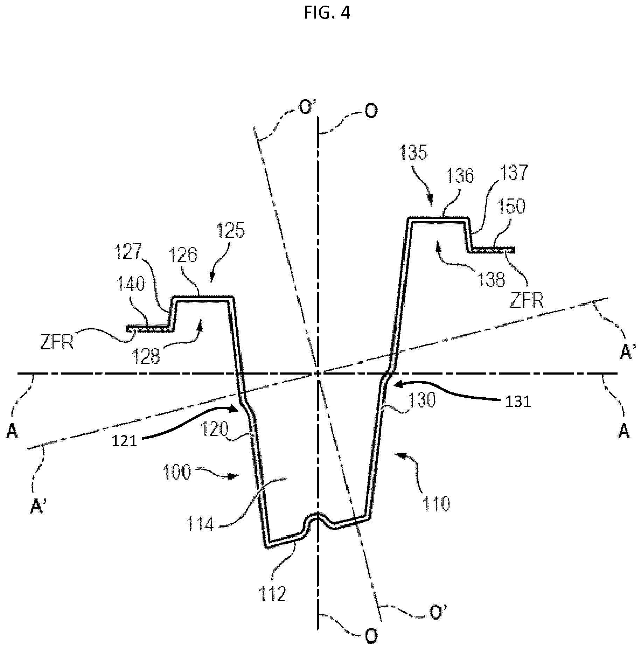

On a schématisé sur la figure 4 une variante de pièce conforme à la présente invention, sans axe de symétrie.

On aperçoit sur cette figure 4 des axes O-O et A-A se croisant au niveau du centre d'inertie et orthogonaux entre eux, définissant la direction des efforts et moments appliqués. L'axe O-O définit l'axe des efforts tranchants et l'axe A-A définit l'axe des moments fléchissants. Des axes neutres élastiques résultants O'-O' et A'-A' correspondant aux axes principaux d'inertie sont également représentés sur la figure 4.

La poutre représentée sur la figure 2 comprend une pièce 100 comprenant un corps principal 110 de section droite générale en U et deux flasques latéraux 140, 150.

Le corps principal en U 110 comprend une âme ou fond de pièce 112. Le fond de pièce 112 a une orientation générale sensiblement parallèle à l'axe neutre de flexion principale A-A, donc orthogonale à l'axe de symétrie O-O.

Cependant comme illustré sur la figure 2, selon l'invention, le fond de pièce 112 est muni d'une ou plusieurs nervures de raidissement 113, de préférence dirigées vers l'intérieur du U. De façon plus générale le fond de pièce 112 peut ainsi être muni de transitions ou marches formant une discontinuité de courbure, dont la nervure de raidissement 113 constitue un exemple de réalisation.

L'âme ou fond de pièce 112 est non confondu avec l'axe neutre de flexion principale A-A, c'est-à-dire qu'il est distant de cet axe neutre de flexion principale A-A.

Le corps principal en U 110 comprend deux ailes ou murs 120, 130, raccordées respectivement aux deux bords opposés de l'âme 112. Les ailes 120, 130 coupent l'axe neutre de flexion principale A-A. Les deux ailes 120, 130 peuvent être globalement parallèles à l'axe de symétrie O-O.

Cependant, de préférence, les deux ailes 120,130 divergent en éloignement du fond de pièce 112, par exemple selon un angle de l'ordre de 5 à 30°.

Typiquement, les deux ailes 120, 130, coupent l'axe neutre de flexion principale A-A au deux tiers de leur longueur.

De plus selon l'invention comme illustré sur la figure 2, les ailes ou murs 120, 130 sont munis de transitions ou marches 121, 131 formant une discontinuité de courbure, selon la rigidité intrinsèque recherchée pour ces ailes ou murs 120, 130. Plus précisément, les transitions 121, 131 peuvent être constituées par un double coudage arrondi qui comprend un point d'inflexion, ou bien par un segment rectiligne qui relie chacune des extrémités de l'aile 120, 130 en formant un angle. Ces deux variantes peuvent être combinées, par exemple en réalisant un double coudage arrondi qui comprend un point d'inflexion sur un segment rectiligne qui relie chacune des extrémités de l'aile 120, 130 en formant un angle.

On a représenté à la figure 3 une variante de pièce conforme à la présente invention, pour laquelle le corps principal 110 ne comprend qu'une unique transition 121 qui est réalisée sur une l'aile 120, et ledit corps principal 110 ne comprend une zone de plus faible résistance ZFR que sur le flasque latéral 140.

Cependant, selon d'autres variables possibles, le corps principal 110 peut comprendre plusieurs transitions 121, 131 réalisées sur chacune des ailes 120, 130, et ledit corps principal 110 peut comprendre plusieurs zones de plus faible résistance ZFR réalisées sur chacun des flasques latéraux 140, 150.

Selon le mode de réalisation illustré sur la figure 2, les flasques latéraux 140, 150 sont coplanaires et parallèles à l'axe neutre de flexion principale A-A. Selon la variante de réalisation illustrée sur la figure 4, en revanche les flasques 140 et 150, tout en étant parallèles, ne sont pas coplanaires. Selon la figure 4 le flasque 150 est plus éloigné de l'axe neutre de flexion principale A-A que le flasque 140. Par ailleurs selon la figure 4, le fond de pièce 112 n'est pas parallèle à cet axe neutre de flexion principale A-A.

La figure 4 est un exemple de dissymétrie possible applicable à la présente invention. Cependant l'invention n'est pas limitée à la dissymétrie illustrée sur la figure 4 et peut s'appliquer à des pièces présentant de nombreuses autres dissymétries.

Selon l'invention, comme illustré sur les figures 2, 3 et 4, le corps principal 110 comprend en outre des éléments de transition 125, 135 situés respectivement entre les extrémités des ailes 120, 130 opposées au fond de pièce 112 et les flasques latéraux 140, 150. Ces éléments de transition 125, 135 définissent des concavités dirigées vers l'axe neutre de flexion principale A-A.

Selon le mode de réalisation particulier représenté sur les figures 2, 3 et 4, ces éléments de transition 125, 135 comprennent plus précisément chacun une lame 126, 136 globalement parallèle à l'axe neutre de flexion principale A-A raccordée sur l'extrémité des ailes 120, 130, suivie d'une paroi 127, 137 située entre respectivement les lames 126, 136 et les flasques latéraux 140, 150. Les parois 127, 137 sont inclinées par rapport à l'axe neutre de flexion principale A-A, par exemple d'un angle compris entre 10 et 45°. Ces parois 127, 137 divergent en rapprochement des flasques latéraux 140, 150.

A titre d'exemple non limitatif, la hauteur des parois 127, 137 considérée parallèlement à l'axe de symétrie O-O, soit perpendiculairement à l'axe neutre de flexion principale A-A est compris entre 1/4 et 1/8 de la hauteur des ailes 120, 130, typiquement de l'ordre de 1/6 de la hauteur des ailes 120, 130.

On le voit sur les figures 2, 3 et 4, les cloisons 127, 137 d'une part, et les ailes 120, 130 d'autre part, sont situées du même côté des lames 126, 136, c'est-à-dire situées toutes en direction de l'axe neutre de flexion principale A-A à partir des lames 126, 136.

En variante, les zones de transition 125, 135 précitées formées par le raccordement de l'âme plane 126, 136 et de cloisons planes 127, 137 pourraient être remplacées par des moyens équivalents incurvés.

Les flasques latéraux 140, 150 sont par ailleurs formés de voiles plans de préférence coplanaires, perpendiculaires à l'axe de symétrie O-O et parallèles à l'axe neutre de flexion principale A-A. En variante, les flasques latéraux 140, 150 pourraient être inclinés entre eux et par rapport à l'axe neutre de flexion principale A-A.

L'homme de l'art comprendra que les moyens précédemment décrits définissent respectivement au niveau du corps principal en U délimité par le fond de pièce 112 et les deux ailes 120, 130, une cellule 114 travaillant en tension, ou respectivement en compression selon le sens de l'effort, et deux cellules 128, 138 travaillant en compression, ou respectivement en tension selon le sens de l'effort, lorsqu'un effort F1 dans l'axe de symétrie O-O est appliqué. La poutre selon l'invention est conçue pour travailler en flexion suite à l'application de l'effort F1 qui est colinéaire à l'axe de symétrie O-O, l'effort F1 pouvant être possiblement orienté dans les deux sens.

Sur la figure 2, les cellules 114, 128 et 138 précitées sont représentées schématiquement sous forme de zones hachurées.

Plus précisément encore, dans le cadre de l'invention, la largeur b de chaque segment plan constituant le fond de pièce 112 considérée perpendiculairement au plan de l'axe neutre élastique O-O est optimisée pour minimiser la masse de matière utilisée et est égale à

$$b \leq 1{,}9t.\sqrt{E/sy}$$ dans laquelle :

- t représente l'épaisseur de la pièce,
- E représente le module Young du matériau de la pièce et
- sy représente le paramètre de résistance mécanique appelé limite élastique, typiquement égal à 1100MPa.

D'une manière plus générale on peut écrire :

$$b \leq \sqrt{\frac{4 \times \pi^2}{12 \times (1-n)} \times \frac{E}{sy} \times t}$$

avec n : coefficient de poisson de l'ordre de 0,3 pour les aciers.

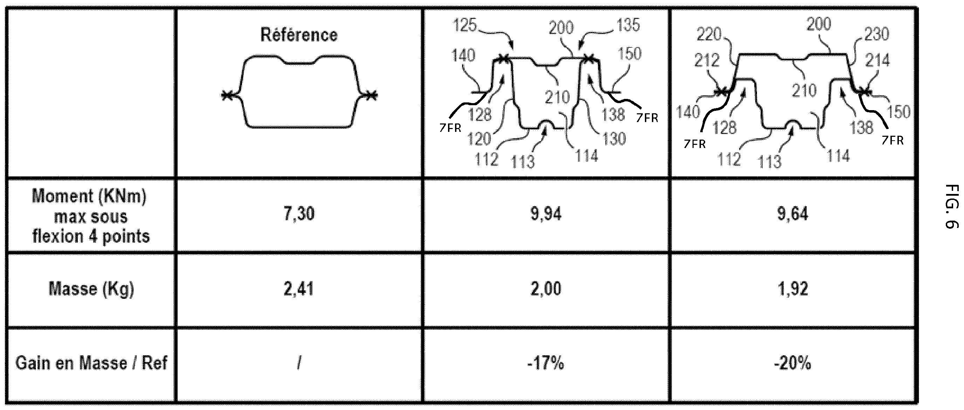

Comme on l'a schématisé sur la figure 6, la poutre conforme à la présente invention peut être complétée par une plaque de recouvrement 200.

La plaque de recouvrement 200 peut faire l'objet de nombreuses variantes de réalisation connues de l'homme de l'art. Elle ne sera donc pas décrite dans le détail par la suite.

Selon le mode de réalisation représenté sur la colonne milieu de la figure 6, la plaque de recouvrement 200 est formée d'une plaque soudée sur le sommet des zones de transition 125, 135 et ladite plaque de recouvrement 200 est munie elle-même en son centre d'une nervure de raidissement 210.

Selon le mode de réalisation représenté sur la colonne de droite de la figure 6, la plaque de recouvrement 200 a la forme d'un chapeau en U dont les flasques latéraux 212, 214 sont raccordés sur les flasques latéraux 140, 150 du corps principal 110, la plaque de recouvrement 200 ayant dans ce cas elle-même une section droite en U dont l'âme comprend une nervure de raidissement 210 et les deux ailes 220, 230 font interface entre l'âme et les flasques latéraux 212, 214.

Selon une autre caractéristique importante de l'invention, la pièce conforme à l'invention comprend, notamment mais non exclusivement au niveau de ces flasques latéraux 140, 150, des zones de plus faible résistance mécanique ZFR que le reste du corps principal 110.

De préférence, ces zones de plus faible résistance mécanique ZFR, sont obtenues par contrôle de la température des zones considérées lors de l'emboutissage de la pièce 100.

Plus précisément encore, dans ce contexte, les zones de plus faibles résistances mécaniques ZFR sont obtenues à l'aide du procédé consistant à :

- chauffer un flanc métallique à une température supérieure à la température de transition austénitique, puis à
- conformer le flanc ainsi chauffé dans un outil d'emboutissage possédant un circuit de refroidissement contrôlé et/ou conformé pour limiter les zones de contact avec le flanc métallique embouti.

Il en résulte que les zones de la pièce métallique en contact avec l'outil d'emboutissage refroidi opèrent une conversion vers une phase martensitique et présentent une forte résistance mécanique, par exemple supérieure à 1400MPa, pour le corps principal d'une manière générale, alors que les zones de la pièce métallique qui ne sont pas en contact direct de l'outil d'emboutissage, voire en contact avec des zones de cet outil d'emboutissage réchauffées localement, restent au contact de l'air ou au contact d'une zone chauffée, sont moins refroidies, et opèrent des conversions de phases intermédiaires entre les phases austénitiques et martensitiques et présentent au final une résistance mécanique plus faible, par exemple inférieure à 1100MPa, typiquement comprise entre 300 et 1000MPa.

D'une manière générale de telles zones de plus faible résistance mécanique ZFR que le reste du corps principal 110 peuvent être formées également en d'autres lieux que sur les flasques 140 et 150, par exemple sur les ailes ou murs 120, 130, voire sur le fond de pièce 112.

Comme indiqué précédemment, la figure 5 représente le moment d'une pièce sous différents angles de déformation.

Plus précisément, les figures 1b, 1c et 1d représentent le moment sous un test de flexion quatre points respectivement correspondant à un choc latéral sur une pièce formant pied milieu de véhicule automobile, pour une pièce de référence telle qu'illustrée sur la figure 5b (courbe 1b), une pièce intermédiaire entre la pièce de référence et l'invention qui est illustrée sur la figure 5c (courbe 1c) et une pièce conforme à un mode de réalisation de l'invention représentée sur la figure 5d (courbe 1d).

La pièce intermédiaire représentée sur la figure 5c, correspond à une pièce en acier usibor d'épaisseur 1,5mm.

La pièce représentée sur la figure 5d, correspond à une pièce en acier usibor d'épaisseur 1,8mm comportant des zones de plus faible résistance mécanique ZFR au niveau de ses flasques latéraux 140, 150.

On rappelle ici que les pièces conformes à la présente invention sont des pièces qui combinent les quatre caractéristiques structurelles suivantes :

1) le corps principal 110 comprend deux éléments de transition 125 et 135 situés respectivement entre les extrémités des ailes 120, 130 opposées au fond de pièce 112 et les flaques latéraux 140, 150, de sorte à délimiter des concavités dirigées vers l'axe neutre de flexion principale A-A, et ainsi délimiter les cellules 114, 128 et 138 travaillant respectivement en tension et en compression, de part et d'autre de l'axe neutre de flexion principale A-A ;

2) au moins une transition 113 formée par une discontinuité de courbure sur le fond de pièce 112 du corps en U 110 ;

3) au moins une transition 121, 131 formée par une discontinuité de courbure sur chacune des ailes 120, 130 du corps en U 121, 131 ; et

4) des zones de plus faible résistance mécanique que le reste du corps en U 110 sur les flasques latéraux 140, 150.

Les courbes 1b, 1c et 1d révèlent que la présente invention permet de conserver un moment résistant supérieur à celui de la pièce de référence illustrée sur la figure 5b.

Il en est de même pour les courbes 2b et 2d qui correspondent au moment respectivement de la référence illustrée sur la figure 4b et du mode de réalisation conforme à l'invention représenté sur la figure 4d en cas de retournement du véhicule et pour les figures 3b et 3d qui correspondent aux mêmes pièces sous un test de flexion trois points.

Un examen comparatif des courbes 1c et 1d montre que la réalisation de zones de plus faible résistance mécanique sur les flasques 140, 150 ne change pas significativement le niveau du moment résistant (puisque la courbe 1d montre un moment maximal du même ordre de grandeur que la courbe 1c) mais permet d'augmenter la capacité d'absorption et donc permet une quantité d'énergie absorbée plus importante.

Comme illustré sur la figure 6, qui compare une pièce de référence avec deux pièces selon deux modes de réalisations selon l'invention différents qui sont en lien avec des plaques de recouvrement 200, tout en maintenant un moment résistant du même ordre de grandeur que la référence, l'invention permet des économies de masse sensible.

Par rapport à la référence présentant un moment maximal sous test de flexion quatre points de 7,30KNm pour une masse totale de 2,41Kg, le premier mode de réalisation représentét sur la colonne du milieu de la figure 6 conduit à un moment maximal sous flexion quatre points de 9,94KNm pour une masse de 2,00Kg, soit un gain en masse de 17%, tandis que la pièce selon le deuxième mode de réalisation représenté sur la colonne de droite de la figure 6 correspond à un moment maximal sous flexion quatre points de 9,34KNm pour une masse de 1,92Kg, soit un gain en masse de 20%.

Comme indiqué précédemment, la redistribution de la matière constitutive du corps principal 110 autour de l'axe principal de flexion A-A du corps, selon l'invention, permet d'obtenir un compromis entre l'augmentation de la masse de la poutre, la résistance maximale à la flexion, et l'énergie absorbée durant la déformation de la pièce..

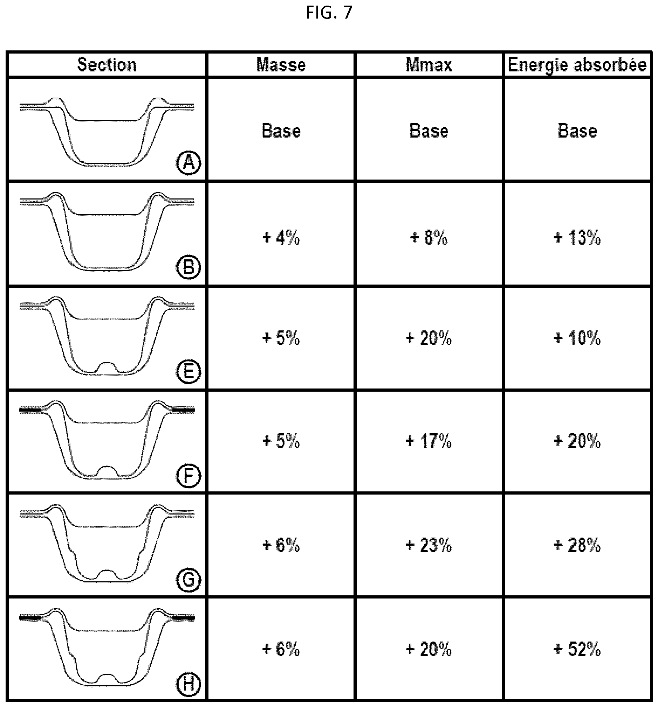

Le tableau présenté par la figure 7 est un tableau qui compare la masse, la résistance maximale à une flexion quatre points, et l'énergie absorbée lors de la déformation de différentes géométries de pièce par rapport à la pièce présentée à la figure 1 (pièce repérée A dans le tableau) afin de pouvoir identifier l'impact des différentes caractéristiques structurelles d'une pièce (par exemple la présence de zones de transition sur les ailes) sur la masse de la pièce, le couple maximum admissible, et l'énergie absorbée durant sa déformation.

Comme visible pour une pièce repérée B dans le tableau de la figure 7, la création des cellules 114, 128 et 138 par la réalisation des deux éléments de transitions 125 et 135 permet d'augmenter le couple maximum admissible de la pièce B d'environ 8%, ainsi que d'augmenter l'énergie absorbée lors de la déformation de ladite pièce B d'environ 13%, tout en augmentant la masse de ladite pièce B que de 4%.

Comme visible pour une pièce repérée E dans le tableau de la figure 7, la création d'une transition 113 formée par une discontinuité de courbure sur le fond du corps en U 110 d'une pièce E comprenant les cellules 114, 128 et 138 permet de passer à une augmentation du couple maximum admissible d'environ 20% (contre 8% sans la transition 113), mais réduit l'énergie absorbée (10% avec la transition 113 contre 13% sans ladite transition 113) et augmente la masse de la pièce E (5% avec la transition 113 contre 4% sans ladite transition 113).

La création de zones de plus faible résistance mécanique ZFR que le reste du corps en U 110 sur les flasques latéraux 140 et 150 sur une pièce F comprenant une transition 113 sur le fond du corps en U 110, ainsi que des cellules 114, 128 et 138, permet d'augmenter l'énergie absorbée en passant d'une augmentation d'environ 20% (contre 10% sans les zones de plus faible résistance mécanique ZFR sur les flaques latéraux 140 et 150) sans modifier la masse de la pièce F, mais réduit le couple maximum admissible (17% avec les zones de plus faible résistance mécanique ZFR sur les flasques latéraux 140 et 150 contre 20% sans).

La création d'au moins une transition 121, 131 sur chacune des ailes 120 et 130 en formant une discontinuité de courbure sur une pièce G comprenant une transition 113 sur le fond du corps en U 110, ainsi que des cellules 114, 128 et 138, permet d'une part d'augmenter le couple maximum admissible en passant à une augmentation d'environ 23% (contre 20% sans les transitions 121 et 131), d'autre part d'augmenter l'énergie absorbée en passant à une augmentation d'environ 28% (contre 10% sans les transitions 121 et 131), mais augmente la masse de la pièce G en passant d'une augmentation d'environ 6% (contre 5% sans les transitions 121 et 131).

Une pièce H selon l'invention, qui comprend des zones de plus faible résistance mécanique ZFR que le reste du corps en U 110 sur les flasques latéraux 140 et 150, au moins une transition 121, 131 formée par une discontinuité de courbure sur chacune des ailes 120 et 130, une transition 113 sur le fond du corps en U 110, ainsi que les cellules 114, 128 et 138 formées par les deux éléments de transition 125 et 135, permet d'obtenir une augmentation de 52% de l'énergie absorbée par rapport à la pièce A, une augmentation du coupe maximum admissible de 20% par rapport à ladite pièce A, pour une masse qui n'est augmentée que d'environ 6% par rapport à ladite pièce A.

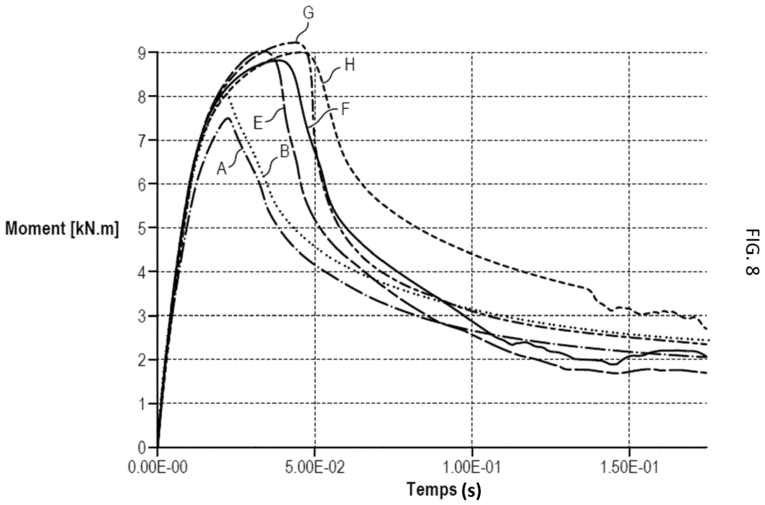

Comme visible sur la figure 8, la pièce H selon l'invention possède une qualité d'absorption d'énergie lors de sa déformation bien supérieure aux autres pièces A, B, E, F et G.

La demanderesse a ainsi observé que l'énergie absorbée par une pièce selon l'invention est de manière surprenante supérieure à l'addition du gain en énergie absorbée apporté par la création d'au moins une transition 121, 131 sur chacune des ailes 120 et 130 et du gain en énergie absorbée apporté par la création de zones de plus faible résistance sur les flasques latéraux 140 et 150.

Cette absorption d'énergie supérieure de la pièce selon l'invention est due à un effet synergique entre les transitions 121 et 131 situées sur les ailes 120 et 130 et les zones de plus faible résistance situées sur les flasques latéraux 140 et 150.

En effet, comme visible sur les figures 9, 10, 11 et 12, l'ajout d'au moins une transition 121, 131 sur chacune des ailes 120 et 130 favorise une répartition des contraintes de compression sur la longueur de la poutre lorsque ladite poutre est soumise à une flexion. De plus, les transitions 121 et 131 permettent aux ailes 120 et 130 de se comprimer selon une direction colinéaire à l'axe O-O car les transitions 121 et 131 forment des amorces à la compression. Une telle compression permet d'une part d'absorber de l'énergie durant la compression des ailes 120 et 130, et d'autre part permet de limiter l'écartement des ailes 120 et 130 du corps principal 110 et ainsi permet de garder les ailes 120 et 130 dans une direction dans laquelle les ailes 120 et 130 ont une résistance à la flexion plus importante.

La création des zones de plus faible résistance mécanique ZFR situées sur les flasques latéraux 140 et 150 permet de retarder et de limiter l'apparition de déformations plastiques dans des zones périphériques à une zone de fléchissement sur laquelle les contraintes sont maximums.

La combinaison des transitions 121 et 131 sur les ailes 120 et 130 avec les zones de plus faible résistance mécanique ZFR situées sur les flasques latéraux 140 et 150 fait que :

- d'une part lesdites transitions 121 et 131 amplifient l'effet de retard et de limitation d'apparition de déformations plastiques sur les zones périphériques à la zone de fléchissement apporté par les zones de plus faible résistance mécanique ZFR situées sur les flasques latéraux 140 et 150 car les transitions 121 et 131 apportent une rigidité supplémentaire à la poutre, ce qui permet d'isoler encore plus la zone de fléchissement du reste de la poutre ; et

- d'autre part lesdites zones de plus faible résistance mécaniques ZFR situées sur les flasques latéraux 140 et 150 permettent une meilleure répartition des contraintes de traction sur la longueur de la pièce d'une façon complémentaire à la répartition des contraintes de compression créée par les transitions 121 et 131.

De plus, la demanderesse s'est aperçue que la réalisation d'au moins une transition formée par une discontinuité de courbure sur le fond de pièce 112 du corps en U 110 est nécessaire afin que les transitions 121 et 122, ainsi que les zones de plus faible résistance situées sur les flasques latéraux 140 et 150 permettent d'augmenter la résistance maximale à la flexion ainsi que l'absorption d'énergie.

Comme indiqué précédemment, la poutre conforme à la présente invention est réalisée en acier.

Elle peut s'appliquer à toute pièce intervenant dans la réalisation d'un véhicule automobile, par exemple un pied milieu, une poutre de porte, une poutre de parechocs, un longeron, etc...

Bien entendu la présente invention n'est pas limitée aux modes de réalisation qui viennent d'être décrits, mais s'étend à toute variante conforme à son esprit.

Comme représenté sur la figure 5d, la poutre conforme à la présente invention peut également comporter une pièce d'habillage 300 sur l'extérieur du corps principal en U 110. Une telle pièce d'habillage 300 optionnelle n'intervient pas sensiblement dans la résistance mécanique totale de la pièce.

De plus, comme représenté sur le tableau figure 14, la demanderesse s'est aperçue qu'un tel effet synergique est également obtenu pour une poutre sur laquelle seule l'aile 120 comprend une transition 121, l'aile 130 ne comprenant pas de transition, ladite poutre ne comprenant également une zone de plus faible résistance mécanique ZFR que sur le flaque latéral 140, le flaque latéral 150 ne comprenant pas de zone de plus faible résistance mécanique ZFR.

La position des transitions 121, 131 sur les ailes 120, 130 peut être située entre 50 - 90% de la hauteur du corps principal 110. Avantageusement, les transitions 121, 131 peuvent être situées entre 60-80% de la hauteur du corps principal 110, encore plus avantageusement à environ 70% de la hauteur du corps principal 110.

On comprendra que 0% de la hauteur du corps principal 110 correspond à la position des flasques latéraux 140 et 150, et que 100% de la hauteur du corps principal 110 correspond à la position du fond de pièce 112.

Enfin, le corps principal 110 peut avoir une section droite constante sur toute sa longueur ou bien une section droite qui est évolutive suivant la longueur dudit corps principal 110.

## Revendications

1. Poutre comportant au moins une première pièce (100) possédant un corps principal (110) de section droite générale en U pourvue de flasques latéraux (140, 150) en saillie vers l'extérieur à partir des bords du U,
le corps principal (110) comprenant également un fond de pièce (112) ainsi que deux ailes (120, 130) qui forment les bords du U,

   - la partie centrale du corps principal (110) définit des cellules (114, 128, 138) travaillant respectivement en tension et en compression de part et d'autre d'un axe neutre de flexion principale (A-A, A'-A'), deux de lesdites cellules formées par deux zones de transition (125, 126, 127; 135, 136, 137) qui sont chacune situées entre l'élément en U (110) et un flasque latéral (140, 150); **caractérisée en ce que**
   - le fond de pièce (112) du corps principal (110) comprend une ou plusieurs nervures de raidissement (113) dirigées vers l'intérieur du U;
   - au moins une aile (120, 130) comprend au moins une transition (121, 131) en forme de double coudage arrondi qui comprend un point d'inflexion, ou bien une transition (121 , 131) qui forme un segment rectiligne qui relie chacune des extrémités de ladite au moins une aile (120, 130) en formant un angle;
   - au moins un flasque latéral (140, 150) comprend au moins une zone de plus faible résistance mécanique (ZFR) que le reste du corps principal (110), ladite au moins une zone de plus faible résistance mécanique (ZFR) étant réalisée du même côté du U que l'aile (120, 130) comprenant ladite au moins une transition (121, 131).

2. Poutre selon la revendication 1, **caractérisée en ce que** chacune des ailes (120, 130) comprend au moins une transition (121, 131), et **en ce que** chacun des flasques latéraux comprend au moins une zone de plus faible résistance mécanique (ZFR).

3. Poutre selon la revendication 1 ou 2, **caractérisée par le fait que** les cellules (114 ; 128, 138) travaillant en tension et les cellules (128, 138 ; 114) travaillant en compression possèdent chacune une concavité tournée vers l'axe neutre de flexion principale (A-A).

4. Poutre selon l'une des revendications qui précèdent, **caractérisée en ce qu'**elle présente un axe de symétrie (O-O).

5. Poutre selon l'une des revendications 1 à 3, **caractérisée en ce qu'**elle présente une dissymétrie.

**6.** Poutre selon l'une des revendications qui précèdent, **caractérisée en ce qu'**elle comprend également des zones de plus faible résistance mécanique que le reste du corps principal (110), au niveau des ailes (120, 130) et/ou du fond de pièce (112) du corps principal en U (110), pour contrôler les déformations.

**7.** Poutre selon l'une des revendications 1 à 6, **caractérisée en ce qu'**elle comprend en outre une plaque de recouvrement (200).

**8.** Poutre selon l'une des revendications 1 à 7, **caractérisée par le fait que** le fond de pièce (112) comprend au moins deux segments plans (b) dont chaque segment plan (b) présente une largeur inférieure ou égale à $1.9\ t.\sqrt{E/sy}$, dans laquelle t représente l'épaisseur de la pièce, E représente le module Young du matériau de la pièce et sy représente le paramètre de résistance mécanique appelé limite élastique, typiquement égal à 1 100MPa.

**9.** Poutre selon l'une des revendications 1 à 8, **caractérisée par le fait que** les zones de transition (125, 126, 127; 135, 136, 137) assurant la liaison entre l'élément en U (110) et les flasques latéraux (140, 150) sont définies chacune par une lame (126, 136) et une paroi (127, 137) qui converge vers l'axe neutre de flexion principale (A-A) en direction des flasques latéraux (140, 150).

**10.** Poutre selon l'une des revendications 1 à 9, **caractérisée par le fait que** les zones de transition (125, 126, 127 ; 135, 136, 137) sont formées d'incurvation.

**11.** Poutre selon l'une des revendications 1 à 10, **caractérisée en ce qu'**au moins une aile (120, 130) comprend au moins une transition (121, 131) située entre 50 - 90% de la hauteur du corps principal (110).

**12.** Poutre selon l'une des revendications 1 à 11, **caractérisée en ce que** la section du corps principal (110) évolue sur la longueur dudit corps principal (110).

**13.** Poutre selon l'une des revendications précédentes, **caractérisé en ce que** les zones de plus faible résistance mécanique (ZFR) ont une valeur de résistance mécanique comprise entre 300MPa et 1000MPa.

**Patentansprüche**

**1.** Träger umfassend mindestens einen ersten Teil (100) aufweisend einen Hauptkörper (110) mit einem allgemeinen U-förmigen geraden Abschnitt, der mit nach außen von den Kanten der U-Form herausragenden seitlichen Flanschen (140, 150) versehen ist, wobei der Hauptkörper (110) ebenso einen Teilboden (112) und zwei Flügel (120, 130) umfasst, die die Kanten der U-Form bilden,

- wobei der mittlere Teil des Hauptkörpers (110) Zellen (114, 128, 138) definiert, die jeweils an beiden Seiten einer neutralen Achse von Hauptbiegung (A-A, A'-A') Spannung und Druckbelastung ausüben, wobei zwei der Zellen durch zwei Übergangsbereiche (125, 126, 127; 135, 136, 137) gebildet sind, die jeweils zwischen dem U-förmigen Element (110) und einem seitlichen Flansch (140, 150) angeordnet sind;

**dadurch gekennzeichnet, dass**

- der Teilboden (112) des Hauptkörpers (110) eine oder mehrere zum Innenteil der U-Form hin gerichtete Aussteifungsrippen (113) umfasst;
- mindestens eine Flügel (120, 130) mindestens einen Übergang (121, 131) in Form einer doppelten abgerundeten Biegung umfassend einen Wendepunkt umfasst, oder einen Übergang (121, 131) umfasst, der einen geraden Abschnitt bildet, der jedes Ende der mindestens einen Flügel (120, 130) durch die Bildung eines Winkels verbindet;
- mindestens ein seitlicher Flansch (140, 150) mindestens einen Bereich geringeren mechanischen Widerstands (ZFR) als der Rest des Hauptkörpers (110) umfasst, wobei der mindestens ein Bereich geringeren mechanischen Widerstands (ZFR) an der gleichen Seite der U-Form als die Flügel (120, 130) umfassend den mindestens einen Übergang (121, 131) gebildet ist.

**2.** Träger nach Anspruch 1, **dadurch gekennzeichnet, dass** jede Flügel (120, 130) mindestens einen Übergang (121, 131) umfasst, und dadurch dass jeder seitliche Flansch mindestens einen Bereich geringeren mechanischen Widerstands (ZFR) umfasst.

**3.** Träger nach Anspruch 1 oder 2, **dadurch gekennzeichnet, dass** die Spannung ausübenden Zellen (114; 128, 138) und die Druckbelastung ausübenden Zellen (128, 138; 114) jeweils eine zur neutralen Achse von Hauptbiegung (A-A) hin gewandte Konkavität aufweisen.

**4.** Träger nach einem der vorhergehenden Ansprüche, **dadurch gekennzeichnet, dass** er eine Symmetrieachse (0-0) aufweist.

**5.** Träger nach einem der Ansprüche 1 bis 3, **dadurch gekennzeichnet, dass** er eine Asymmetrie aufweist.

**6.** Träger nach einem der vorhergehenden Ansprüche, **dadurch gekennzeichnet, dass** er ebenso Bereiche geringeren mechanischen Widerstands als der Rest des Hauptkörpers (110) auf der Ebene der Flügel (120, 130) und/oder des Teilbodens (112) des U-förmigen Hauptkörpers (110) zur Kontrolle der Verformungen umfasst.

**7.** Träger nach einem der Ansprüche 1 bis 6, **dadurch gekennzeichnet, dass** er weiterhin eine Abdeckplatte (200) umfasst.

**8.** Träger nach einem der Ansprüche 1 bis 7, **dadurch gekennzeichnet, dass** der Teilboden (112) mindestens zwei flache Abschnitten (b) umfasst, wobei jeder flache Abschnitt (b) eine Länge aufweist, die

$$1,9 \cdot t \sqrt{\frac{E}{sy}}$$ oder weniger beträgt, wobei t die Dicke des Teils darstellt, E das Young'sche Modul des Materials des Teils darstellt und Sy der als Elastizitätsgrenze bekannte Parameter des mechanischen Widerstands, typischerweise von 1100 MPa, darstellt.

**9.** Träger nach einem der Ansprüche 1 bis 8, **dadurch gekennzeichnet, dass** die Übergangsbereiche (125, 126, 127; 135, 136, 137), welche die Verbindung zwischen dem U-förmigen Element (110) und den seitlichen Flanschen (140, 150) gewährleisten jeweils durch eine Scheibe (126, 136) und eine zur neutralen Achse der Hauptbiegung (A-A) in der Richtung der seitlichen Flanschen (140, 150) konvergierende Wand (127, 137) definiert sind.

**10.** Träger nach einem der Ansprüche 1 bis 9, **dadurch gekennzeichnet, dass** die Übergangsbereiche (125, 126, 127; 135, 136, 137) durch Biegungen gebildet sind.

**11.** Träger nach einem der Ansprüche 1 bis 10, **dadurch gekennzeichnet, dass** mindestens eine Flügel (120, 130) mindestens einen sich auf zwischen 50 - 90% der Höhe des Hauptkörpers (110) befindenden Übergangs (121, 131) umfasst.

**12.** Träger nach einem der Ansprüche 1 bis 11, **dadurch gekennzeichnet, dass** das Profil des Hauptkörpers (110) mit der Länge des Hauptkörpers (110) variiert.

**13.** Träger nach einem der vorhergehenden Ansprüche, **dadurch gekennzeichnet, dass** die Bereiche geringeren mechanischen Widerstands (ZFR) einen Wert des mechanischen Widerstands von zwischen 300 MPa und 1.000 MPa haben.

**Claims**

**1.** Beam comprising at least one first part (100) having a main body (110) of a general straight U-shaped cross section provided with lateral flanges (140, 150) protruding outwards from the sides of the U, the main body (110) further comprising a part bottom (112) as well as two wings (120, 130) forming the sides of the U,

- the central portion of the main body (110) defining cells (114, 128, 138) acting respectively in tension and compression on both sides of a neutral axis of main flexure (A-A, A'-A'), two of said cells being formed by two transition zones (125, 126, 127; 135, 136, 137) which are each located between the U-shaped element (110) and a lateral flange (140, 150);

**characterised in that**

- the part bottom (112) of the main body (110) comprises one or several stiffening ribs (113) that are directed towards the inside of the U;
- at least one wing (120, 130) comprises at least one transition (121, 131) in the shape of a double rounded bending that comprises a point of inflexion, or one transition (121, 131) that forms a straight segment which connects each of the ends of said at least one wing (120, 130) by forming an angle;
- at least one lateral flange (140, 150) comprises at least one zone of lower mechanical strength (ZFR) than the rest of the main body (110), said at least one zone of lower mechanical strength (ZFR) being made on the same side of the U as the wing (120, 130) comprising said at least one transition (121, 131).

**2.** Beam according to claim 1, **characterised in that** each of the wings (120, 130) comprises at least one transition (121, 131), and **in that** each of the lateral flanges comprises at least one zone of lower mechanical strength (ZFR).

**3.** Beam according to claim 1 or 2, **characterised by** the fact that the cells (114; 128, 138) acting in tension and the cells (128, 138; 114) acting in compression have each a concavity turned towards the neutral axis of main flexure (A-A).

**4.** Beam according to any one of the preceding claims, **characterised in that** it has an axis of symmetry (0-0).

**5.** Beam according to any one of claims 1 to 3, **characterised in that** it has an asymmetry.

6. Beam according to any one of the preceding claims, **characterised in that** it also comprises zones of lower mechanical strength than the rest of the main body (110), at the level of the wings (120, 130) and/or the part bottom (112) of the main body in the shape of a U (110), to control the deformations.

7. Beam according to any one of claims 1 to 6, **characterised in that** it further comprises a cover plate (200).

8. Beam according to any one of claims 1 to 7, **characterised by** the fact that the part bottom (112) comprises at least two planar segments (b), which planar segments (b) each have a length that is less than or equal to $1{,}9 \cdot t\sqrt{\dfrac{E}{sy}}$ , where t represents the thickness of the part, E represents the Young's modulus of the material of the part and Sy represents the parameter of mechanical strength known as elastic limit, being typically 1,100 MPa.

9. Beam according to any one of claims 1 to 8, **characterised by** the fact that the transition zones (125, 126, 127; 135, 136, 137) providing for a link between the U-shaped element (110) and the lateral flanges (140, 150) are each defined by a plate (126, 136) and a wall (127, 137) that converges towards the neutral axis of main flexure (A-A) in the direction of the lateral flanges (140, 150).

10. Beam according to any one of claims 1 to 9, **characterised by** the fact that the transition zones (125, 126, 127; 135, 136, 137) are formed by a curving.

11. Beam according to any one of claims 1 to 10, **characterised in that** at least one wing (120, 130) comprises at least one transition (121, 131) situated at between 50 - 90% of the height of the main body (110).

12. Beam according to any one of claims 1 to 11, **characterised in that** the cross-section of the main body (110) varies along the length of said main body (110).

13. Beam according to any one of the preceding claims, **characterised in that** the zones of lower mechanical strength (ZFR) have a value of mechanical strength comprised between 300 MPa and 1,000 MPa.

FIG. 1

FIG. 2

FIG. 3

FIG. 4

**FIG. 5a**

1) 4pts ⊕
2) 4pts ⊖
3) 3pts ⊕

**FIG. 5b**

**FIG. 5c**

**FIG. 5d**

FIG 5

## FIG. 6

| | Référence | | |
|---|---|---|---|
| Moment (KNm) max sous flexion 4 points | 7,30 | 9,94 | 9,64 |
| Masse (Kg) | 2,41 | 2,00 | 1,92 |
| Gain en Masse / Ref | / | -17% | -20% |

FIG. 7

| Section | Masse | Mmax | Energie absorbée |
|---|---|---|---|
| Ⓐ | Base | Base | Base |
| Ⓑ | + 4% | + 8% | + 13% |
| Ⓔ | + 5% | + 20% | + 10% |
| Ⓕ | + 5% | + 17% | + 20% |
| Ⓖ | + 6% | + 23% | + 28% |
| Ⓗ | + 6% | + 20% | + 52% |

FIG. 8

FIG. 9a

FIG. 9b

Echelle des
déformations
plastiques

1.000e-01
8.333e-02
6.667e-02
5.000e-02
3.333e-02
1.667e-02
0.000e+00

FIG 9

FIG. 9c

FIG. 9d

FIG. 10a

121   113   131

FIG. 10b

FIG. 10

Echelle des
déformations
plastiques

1.000e-01
8.333e-02
6.667e-02
5.000e-02
3.333e-02
1.667e-02
0.000e+00

FIG. 10c

FIG. 10d

FIG. 11a

ZFR          ZFR

113

FIG. 11b

FIG. 11

Echelle des
déformations
plastiques

1.000e-01
8.333e-02
6.667e-02
5.000e-02
3.333e-02
1.667e-02
0.000e+00

FIG. 11c

FIG. 11d

FIG. 12a

113

FIG. 12b

Echelle des
déformations
plastiques

1.000e-01
8.333e-02
6.667e-02
5.000e-02
3.333e-02
1.667e-02
0.000e+00

FIG. 12

FIG. 12c

FIG. 12d

## FIG. 13

ZFR

121

131

113

121

131

113

ZFR

ZFR

113

113

1.784e+03

1.345e+03

9.059e+02

4.671e+02

2.829e+01

Niveau de
contraintes

FIG. 14

| Section | Masse | Mmax | Energie absorbée |
|---------|-------|------|------------------|
|  | Base | Base | Base |
| 121  113 131 | + 6% | + 23% | + 28% |
| ZFR  ZFR  121  113 131 | + 6% | + 20% | + 52% |
| 121  113 | + 5,5% | + 19% | + 43% |
| ZFR  121  113 131 | + 6% | +22% | + 40% |
| ZFR  121  113 | + 5,5% | + 21% | + 34% |

## RÉFÉRENCES CITÉES DANS LA DESCRIPTION

**Documents brevets cités dans la description**

- WO 2011071434 A
- US 2012119477 A
- US 2003000156 A
- US 2001024054 A
- DE 102009047956
- US 2013300155 A
- JP H0456688 B
- US 2011163571 A
- GB 2497396 A
- US 2013140851 A